(19) Europäisches Patentamt
European Patent Office
Office européen des brevets

(11) **EP 3 261 345 A1**

(12) **EUROPEAN PATENT APPLICATION**

(43) Date of publication:
**27.12.2017 Bulletin 2017/52**

(51) Int Cl.:
**H04N 19/39** *(2014.01)* **H04N 19/895** *(2014.01)*
**H04N 19/59** *(2014.01)*

(21) Application number: **17173029.4**

(22) Date of filing: **26.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.06.2016 JP 2016122973**

(71) Applicant: **Fujitsu Limited**
**Kawasaki-shi, Kanagawa 211-8588 (JP)**

(72) Inventor: **Togo, Tsutomu**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **ENCODING PROGRAM, ENCODING METHOD, ENCODING APPARATUS, DECODING PROGRAM, DECODING METHOD, AND DECODING APPARATUS**

(57) An encoding method includes; acquiring a first image; separating the first image into a plurality of second images by extracting a pixel in the first image after every predetermined number of pixels in each of horizontal and vertical directions of the first image; and encoding each of the separated second images. By transmitting those pieces of encoded data, even if a packet loss occurs in one of the second images, the missing pixel can be re-generated based on corresponding neighboring pixels in other second images.

FIG. 1

EP 3 261 345 A1

## Description

FIELD

The embodiments discussed herein are related to an encoding program, an encoding method, an encoding apparatus, a decoding program, a decoding method, and a decoding apparatus.

BACKGROUND

In streaming a video or the like, part of the stream data is sometimes lost over a network due to packet loss. Packet loss is more likely to occur, for example, over mobile networks for mobile phones and the like, which are prone to variation in communication bandwidth. If the frequency of occurrence of packet loss increases, the receiver of the stream will frequently experience disturbance of the reproduced video. Further, in a case where encoding using inter-frame prediction is performed, not only the frame experiencing packet loss but also other frames used by this frame for the inter-frame prediction are affected.

As techniques for handling such packet loss, there have been ones as below. For example, there has been a technique in which a key frame such as an intra picture (I picture) is regularly inserted so that, when packet loss occurs in the middle, the frame experiencing the packet loss may be restored using the key frame. There has also been a technique in which, when packet loss occurs, that packet is retransmitted and the retransmitted packet is used to reconstruct the data stream, which is then decoded and displayed. Besides these, there has also been a technique in which a piece of moving-image data is encoded using a plurality of compression ratios, and the pieces of encoded data with the lowest compression ratio and therefore the highest image quality are selected from the pieces of encoded data properly received by the reception side and then decoded on a frame-to-frame basis or a packet-to-packet basis. Related techniques are disclosed in, for example, Japanese Laid-open Patent Publication No. 2001-339722 and International Publication Pamphlet No. WO 2003/092295.

However, the above techniques might not be able to suppress variation in image quality resulting from packet loss. For example, in the case of inserting key frames, the occurrence of packet loss in a key frame makes it impossible to suppress decrease in the image quality of the video until the next key frame is received. Also, in the case of retransmitting a packet, the reception side has to wait until the packet is retransmitted and therefore experiences a transfer delay. In this case too, the image quality is deteriorated since the reproduction of the retransmitted frame is delayed by the transfer delay. Further, in the case of encoding a piece of moving-image data by using a plurality of compression ratios, it is possible that a piece of moving-image data with frames at different compression ratios might be decoded. In this case, a video with low image quality is reproduced when packet loss is present and a video with high image quality is reproduced when no packet loss is present, thereby causing variation in image quality between frames.

According to one aspect, an object of the embodiments is to provide an encoding program, an encoding method, an encoding apparatus, a decoding program, a decoding method, and a decoding apparatus which are capable of suppressing variation in image quality resulting from packet loss.

SUMMARY

According to an aspect of the invention, an encoding method includes; acquiring a first image; separating the first image into a plurality of second images by extracting a pixel in the first image after every predetermined number of pixels in each of horizontal and vertical directions of the first image; and encoding each of the separated second images. By transmitting those pieces of encoded data, even if a packet loss occurs in one of the second images, the missing pixel can be re-generated based on corresponding neighboring pixels in other second images.

BRIEF DESCRIPTION OF DRAWINGS

FIG. 1 is a block diagram illustrating the functional configurations of apparatuses included in a transfer system according to embodiment 1;
FIG. 2 is a diagram illustrating an example of a transmission sequence;
FIG. 3 is a diagram illustrating an example of a reception sequence;
FIG. 4 is a diagram illustrating an example of a unit of encoding;
FIG. 5 is a diagram illustrating an example of a unit of encoding;
FIG. 6 is a flowchart illustrating the procedure of an encoding process according to embodiment 1;
FIG. 7 is a flowchart illustrating the procedure of a decoding process according to embodiment 1; and
FIG. 8 is a diagram illustrating an example hardware configuration of a computer that executes an encoding program according to embodiment 1 and embodiment 2.

DESCRIPTION OF EMBODIMENTS

Hereinafter, an encoding program, an encoding method, an encoding apparatus, a decoding program, a decoding method, and a decoding apparatus according to the present application will be described with reference to the accompanying drawings. It is to be noted that the following embodiments do not limit the disclosed technique. Moreover, the embodiments may be combined as appropriate as long as the contents of processes do not contract each other.

[Embodiment 1]

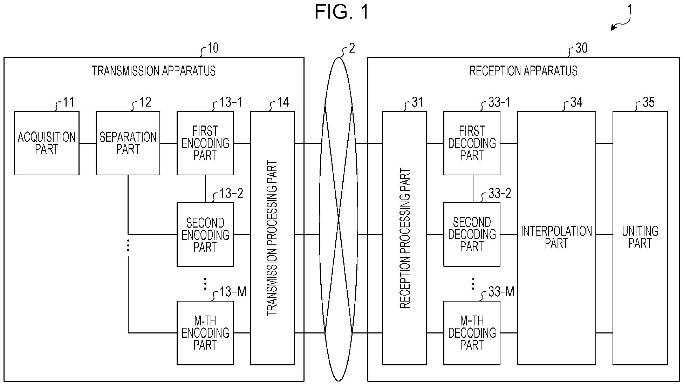

FIG. 1 is a block diagram illustrating the functional configurations of apparatuses included in a transfer system according to embodiment 1. A transfer system 1 illustrated in FIG. 1 is configured to provide a transfer service for transferring video data streams from a transmission apparatus 10 to a reception apparatus 30.

As illustrated in FIG. 1, the transfer system 1 includes the transmission apparatus 10 and the reception apparatus 30. The transmission apparatus 10 and the reception apparatus 30 are connected by a network 2. While the network 2 may be constructed using any communication network, it may also partly include a mobile communication network, or a mobile network. For example, one or both of the transmission apparatus 10 and the reception apparatus 30 may be connected to the network 2 through a base station or the like.

The transmission apparatus 10 is a computer from which a video is transmitted, and the reception apparatus 30 at which the video is received. The transmission apparatus 10 and the reception apparatus 30 may each be implemented using any computer such as an embedded microcomputer, a general-purpose computer, or a workstation. Besides these, mobile communication terminals such as mobile phones including smartphones and personal handy-phone systems (PHS) and also mobile terminals in general including slates and tablets may be employed as the transmission apparatus 10 and the reception apparatus 30.

Thus, any mode of implementation and any mode of connection may be employed for the transmission apparatus 10 and the reception apparatus 30 in accordance with the content of the above-mentioned transfer service. Examples of the transfer service include a video surveillance service for security, rivers, or the like, a video transfer service for broadcasting, and a maintenance and management service for roads, bridges, or the like. However, these are mere examples, and the range of application is not limited to these examples.

Here, as part of the above transfer service, the transmission apparatus 10 provides an encoding service involving separating a first image to be transferred into a plurality of second images by extracting a pixel in the first image after every predetermined number of pixels in each of the horizontal and vertical directions of the first image, and encoding each second image. In the following, an original image of a video stream will be presented as an example of the "first image", and sub-samples obtained by separating the original image will be presented as an example of the "second images".

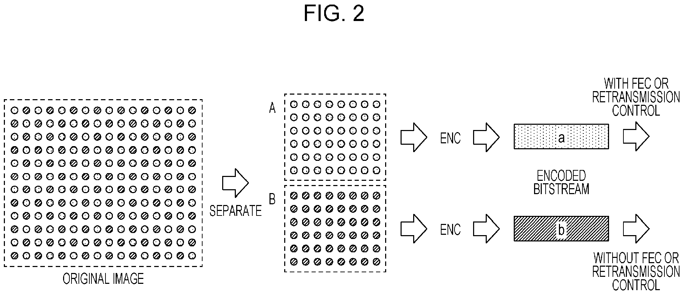

FIG. 2 is a diagram illustrating an example of a transmission sequence. FIG. 2 illustrates one original image of a video to be streamed from the transmission apparatus 10 to the reception apparatus 30 and exemplarily illustrates a case where the original image is separated into two sub-samples. As illustrated in FIG. 2, the transmission apparatus 10 extracts a pixel in the original image after every one pixel in each of the horizontal and vertical directions of the original image. Thus, among the pixels in the original image illustrated in FIG. 2, the pixels illustrated as the white circles are extracted and also the black-circle pixels, which remain as a result of extracting the white-circle pixels, are extracted as well. Consequently, the original image is separated into a sub-sample A and a sub-sample B with a 1/2 resolution in both the horizontal and vertical directions. Thus, by performing the above separation upon every input of an original-image frame, a video sequence of sub-samples A and a video sequence of sub-samples B are obtained from a video sequence of original images.

Thereafter, the transmission apparatus 10 performs video compression encoding on each of the sub-samples obtained by the above separation. Consequently, from the video sequence of sub-samples A, encoded data a of each frame is obtained and, from the video sequence of sub-samples B, encoded data b of each frame is obtained.

While the encoded data a and the encoded data b may be transmitted using the same transmission method, they may be transmitted using different transmission methods in view of achieving both real-time performance and improved image quality. For example, the transmission apparatus 10 transmits a stream of encoded data a and a stream of encoded data b to the reception apparatus 30 with a protocol such as the Realtime Transport Protocol (RTP). Here, the transmission apparatus 10 additionally uses at least one of forward error correction (FEC) and retransmission control using Automatic Repeat-reQuest (ARQ) for the encoded data a. Further, the transmission apparatus 10 may send the streams of encoded data a and encoded data b at the same timing to the network 2 but may send them at different timings to the network 2. For example, the transmission apparatus 10 may start sending the encoded data a, which is to be transferred with FEC or the retransmission control, to the network 2 and then start sending the encoded data b, which is to be transferred with neither FEC nor the retransmission control, to the network 2 with a predetermined time delay.

With such an encoding service, the reception apparatus 30 may provide a decoding service as below. Specifically, in a case where packet loss occurs in any of sub-samples sent from the transmission apparatus 10 to the network 2, the reception apparatus 30 may restore the original image after performing interpolation for the missing part of the sub-sample experiencing the packet loss by using the pixels of the region corresponding to the missing part on a sub-sample experiencing no packet loss.

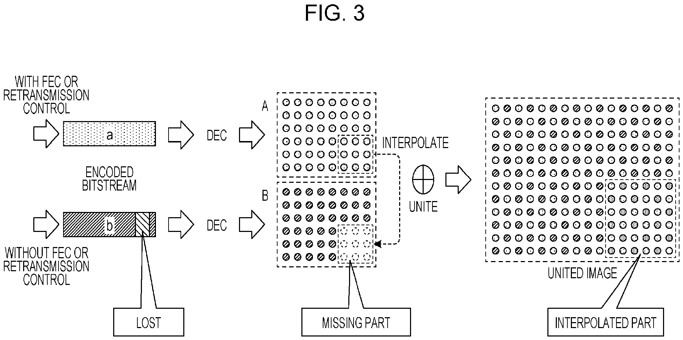

FIG. 3 is a diagram illustrating an example of a reception sequence. FIG. 3 illustrates a case where the reception apparatus 30 receives the encoded data a and the encoded data b illustrated in FIG. 2 and illustrates an example where packet loss has occurred in part of the encoded data b. As illustrated in FIG. 3, upon receipt of the encoded data a and the encoded data b from the transmission apparatus 10, the reception apparatus 30 performs decoding for each sub-sample. Consequently, the encoded data a is decoded into the sub-sample A, and the encoded data b is decoded into the sub-sample B.

Here, as illustrated in FIG. 3, due to the packet loss occurring in part of the encoded data b, the sub-sample B is missing the pixel values of the pixels in the part surrounded by a dotted line in FIG. 3. Hereinafter, a pixel missing its pixel value will also be referred to as a "missing pixel" and a collection of missing pixels will also be referred to as a "missing part". When a missing part is present in the sub-sample B as described above, the reception apparatus 30 uses, in the interpolation, the pixel values of the pixels in the region corresponding to the missing part of the sub-sample B on the sub-sample A, which experienced no packet loss.

Specifically, the sub-sample A and the sub-sample B are collections of pixels obtained by alternately extracting one pixel in the original image in the horizontal and vertical directions thereof. Thus, in a situation where a missing part is present in the sub-sample B but no missing part is present in the sub-sample A, the pixels in the original image on the left, right, upper, and lower sides of each missing pixel of the sub-sample B are pixels of the sub-sample A. Thus, even when packet loss occurs in a sub-sample, the possibility of missing the pixel values of pixels sitting adjacent to each other on the original image is reduced. This enhances the accuracy of interpolation using a pixel(s) near a missing pixel, for example, the pixels on the left, right, upper, and lower sides of the missing pixel. The reception apparatus 30 then unites the sub-sample A and the sub-sample B to thereby restore the original image.

[Configuration of Transmission Apparatus 10]

As illustrated in FIG. 1, the transmission apparatus 10 includes an acquisition part 11, a separation part 12, a first encoding part 13-1 to an M-th encoding part 13-M, and a transmission processing part 14. It is needless to say that the transmission apparatus 10 may include functional parts which the computer implemented as the transmission apparatus 10 is equipped with as standard features, for example, a communication interface and the like besides the functional parts illustrated in FIG. 1.

The acquisition part 11 is a processing part that acquires a first image. In one embodiment, the acquisition part 11 acquires a live video captured by a camera not illustrated as original images. In another example, the acquisition part 11 may acquire original images from an auxiliary storage device such as a hard disk drive (HDD) or an optical disc or a removable medium such as a memory card or a universal serial bus (USB) memory that stores videos therein. In still another example, the acquisition part 11 may acquire original images by receiving them from an external device through a network. As described above, how the transmission apparatus 10 acquires a video sequence of original images may be any way and is not limited to a particular way.

The separation part 12 is a processing part that separates a first image into a plurality of second images. In one embodiment, each time the acquisition part 11 acquires an original-image frame, the separation part 12 separates the original image into a plurality of sub-samples by repeating a process of extracting a pixel in the original image after every predetermined number of pixels in each of the horizontal and vertical directions of the original image. For example, when the number of divisions of the original image is 2, the separation part 12 extracts pixels in the original image after every one pixel (or every other pixel) in each of the horizontal lines, while the extract starting position is shifted for one pixel in every other horizontal line, as a first divided image. Then, the separation part 12 extracts the remaining pixels in the original image as a second divided image. Consequently, one original image is separated into M sub-samples.

When the number of divisions of the original image is 4, the separation part 12 extracts pixels in the original image every other pixel in every other horizontal line as a first divided image, extracts the remaining pixels in those every other horizontal lines as a second divided image, extracts pixels every other pixel in every remaining horizontal lines as a third divided image, and extracts the remaining pixels in the every remaining horizontal lines as a fourth divided image. To generalize this, when the number of divisions is M, the separation part 12 extracts a pixel from the original image after every (square root of M) - 1 pixels in after every (square root of M) - 1 horizontal line, and repeat this process, with shifting the extract starting position for one pixel for both of the horizontal and the vertical directions, for M times in total. (Please note that the value M here should be a square of an integer of 2 or more. For other value of M, some specific process will be required, depending on the specific value of M.) Consequently, one original image is separated into M sub-samples.

The following assumes, as a mere example, a case where the process of extracting sub-samples and the processing of encoding the sub-samples are performed in parallel and the sub-samples are inputted into the first encoding part 13-1 to the M-th encoding part 13-M, respectively. Specifically, for each single sub-sample, extracted pixels are sequentially inputted into the encoding part before the completion of extraction of all the pixels of the sub-sample. Also, the extraction and encoding of a sub-sample and the extraction and encoding of the other sub-sample(s) may be processed in parallel.

The first encoding part 13-1 to the M-th encoding part 13-M are processing parts that encodes respective sub-samples.

In one embodiment, the first encoding part 13-1 to the M-th encoding part 13-M carries out reduction of the amount of information by using the difference from a predicted image, removal of high-frequency components via orthogonal transform, entropy encoding, and the like based on a predetermined unit(s) of encoding. For example, when H.264 is employed as the encoding scheme, the unit of encoding is macroblock (MB) which is an image region with a fixed size of 16 x 16 pixels. Alternatively, when the high efficiency video coding (HEVC) is employed as the encoding scheme, the unit of encoding has a hierarchical quadtree structure and includes coding unit (CU), variable from 8 x 8 to 64 x 64 pixels, and prediction unit (PU) or transform unit (TU).

Here, the first encoding part 13-1 to the M-th encoding part 13-M share a common encoding mode for use in encoding their encoding-unit blocks on a block-by-block basis. The "encoding mode" here includes whether or not to perform inter-frame prediction, such as "Inter/Intra". Further, the "encoding mode" includes a reference direction such as predicted frame (P frame) or bidirectional predicted frame (B frame). Furthermore, the "encoding mode" includes a type such as inter- and intra-frame predictions or inter- and intra-field predictions. In addition, the first encoding part 13-1 to the M-th encoding part 13-M also share a common predicted motion vector for use in encoding their encoding-unit blocks on a block-by-block basis.

In the case where the first encoding part 13-1 to the M-th encoding part 13-M share a common encoding mode for their encoding-unit blocks as mentioned above, the sharing may be realized through a procedure as below. For example, after encoding a sub-sample allocated to the first encoding part 13-1, the first encoding part 13-1 notifies the second encoding part 13-2 of the unit of encoding and the encoding mode. Thereafter, the second encoding part 13-2 encodes a sub-sample allocated to the second encoding part 13-2 by using the unit of encoding and the encoding mode notified of from the first encoding part 13-1, and then notifies the third encoding part 13-3 of the unit of encoding and the encoding mode. This is repeated and lastly the M-th encoding part 13-M encodes a sub-sample allocated to the M-th encoding part 13-M by using the unit of encoding and the encoding mode notified of from the (M-1)-th encoding part 13-(M-1). Alternatively, after encoding the sub-sample allocated to the first encoding part 13-1, the first encoding part 13-1 may notify the second encoding part 13-2 to the M-th encoding part 13-M of the unit of encoding and the encoding mode.

Further, the first encoding part 13-1 to the M-th encoding part 13-M match the amounts of information of pieces of encoded data in blocks in their sub-samples, the blocks corresponding to each other in position on the original image, and further match each of these amounts of information and the amount of information of a piece of encoded data obtainable by encoding a block in the original image. These are done so that the decoded image will not appear unnatural due to blocks with different image qualities.

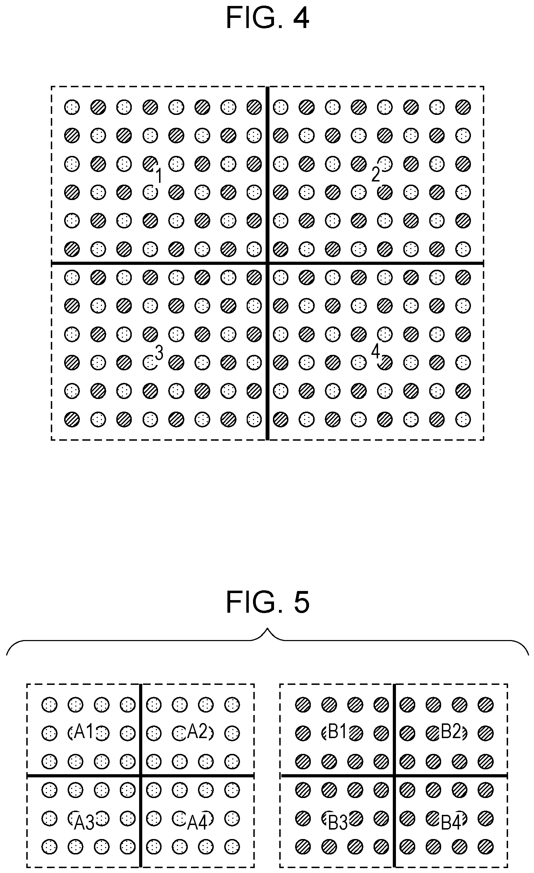

FIGs. 4 and 5 are diagrams illustrating example units of encoding. FIGs. 4 and 5 illustrate a case where an original image is separated into two sub-samples A and B, as in FIG. 2. FIG. 4 illustrates encoding-unit blocks 1 to 4 in the original image illustrated in FIG. 2. FIG. 5 illustrates encoding-unit blocks A1 to A4 and encoding-unit blocks B1 to B4 in the sub-sample A and the sub-sample B illustrated in FIG. 2. The amounts of information of pieces of encoded data obtained by encoding the blocks 1, 2, 3, and 4 in the original image illustrated in FIG. 4 will be denoted as "$J_1$", "$J_2$", "$J_3$", and "$J_4$", respectively, and the sum of these will be denoted as "$\Sigma J$". Further, the amounts of information of pieces of encoded data obtained by encoding the blocks A1, A2, A3, and A4 in the sub-sample A illustrated in FIG. 5 will be denoted as "$J_{A1}$", "$J_{A2}$", "$J_{A3}$", and "$J_{A4}$", respectively, and the sum of these will be denoted as "$\Sigma J_A$". Furthermore, the amounts of information of pieces of encoded data obtained by encoding the blocks B1, B2, B3, and B4 in the sub-sample B illustrated in FIG. 5 will be denoted as "$J_{B1}$", "$J_{B2}$", "$J_{B3}$", and "$J_{B4}$", respectively, and the sum of these will be denoted as "$\Sigma J_B$".

Here, the first encoding part 13-1 to the M-th encoding part 13-M encode the encoding-unit blocks in their respective sub-samples so as to satisfy equations (1) to (4) given below. In this way, when the sub-samples are united after decoding, the encoding-unit blocks are less likely to differ in image quality in the united original image. In one example, to obtain matched amounts of information satisfying equations (1) to (4), the amount of information of the piece of encoded data in each encoding-unit block in the original image may be estimated, and the first encoding part 13-1 to the M-th encoding part 13-M may then perform encoding based on the estimation.

$$J_{A1}/\Sigma J_A \cong J_{B1}/\Sigma J_B \cong J_1/\Sigma J \ \ ... (1)$$

$$J_{A2}/\Sigma J_A \cong J_{B2}/\Sigma J_B \cong J_2/\Sigma J \ \ ... (2)$$

$$J_{A3}/\Sigma J_A \cong J_{B3}/\Sigma J_B \cong J_3/\Sigma J \ \ ... (3)$$

$$J_{A4}/\Sigma J_A \cong J_{B4}/\Sigma J_B \cong J_4/\Sigma J \ \ ... (4)$$

The transmission processing part 14 is a processing part that transmits pieces of encoded data of sub-samples.

In one embodiment, the transmission processing part 14 transmits pieces of encoded data obtained by the first encoding part 13-1 to the M-th encoding part 13-M by encoding respective sub-samples to the reception apparatus 30. In doing so, the transmission processing part 14 may transmit the pieces of encoded data using the same transmission method but may transmit them using different transmission methods in view of achieving both real-time performance and improved image quality. For example, in the case of transferring encoded data a and encoded data b, as illustrated in FIG. 2, the transmission processing part 14 transmits a stream of encoded data a and a stream of encoded data b to the reception apparatus 30 by using a protocol such as RTP. In doing so, the transmission processing part 14 additionally uses at least one of FEC and retransmission control using ARQ for the encoded data a. Further, the transmission processing part 14 may send the streams of encoded data a and encoded data b at the same timing to the network 2 but may send them at different timings to the network 2. For example, the transmission processing part 14 may start sending the encoded data a, which is to be transferred with FEC or the retransmission control, to the network 2 and then start sending the encoded data b, which is to be transferred with neither FEC nor the retransmission control, to the network 2. Here, in one example, in the case where an original image is separated into a plurality of sub-samples, the first half of the pieces of encoded data to be outputted from the first encoding part 13-1 to the M-th encoding part 13-M may be transmitted with a combination of RTP and FEC or the retransmission control, and the last half may be transmitted with RTP.

FIG. 1 has exemplarily illustrated the case where sub-samples are encoded in parallel. Sub-samples may be sequentially encoded and transferred. In this case, it is more efficient to firstly encode the sub-sample to be transmitted with the combination of RTP and FEC or the retransmission control.

Also, the above-described processing parts such as the acquisition part 11, the separation part 12, the first encoding part 13-1 to the M-th encoding part 13-M, and the transmission processing part 14 may be implemented as below. For example, the acquisition part 11, the separation part 12, the first encoding part 13-1 to the M-th encoding part 13-M, and the transmission processing part 14 may be implemented by causing a central processing device such as a central processing unit (CPU) to expand and execute a process that functions similarly to these processing parts on a memory. These processing parts may not necessarily be run by a central processing device but may be run by a micro-processing unit (MPU). Alternatively, the above-described processing parts may be implemented using hard-wired logics.

Also, in one example, various semiconductor memory elements such as a random access memory (RAM) and a flash memory are employable as a main storage device to be used by each of the above-described processing parts. Meanwhile, the storage device to be referred to by each of the above-described processing parts may not necessarily be a main storage device but may be an auxiliary storage device. In this case, an HDD, an optical disc, a solid state drive (SSD), or the like may be employed.

[Configuration of Reception Apparatus 30]

As illustrated in FIG. 1, the reception apparatus 30 includes a reception processing part 31, a first decoding part 33-1 to an M-th decoding part 33-M, an interpolation part 34, and a uniting part 35. It is needless to say that the reception apparatus 30 may include functional parts which the computer implemented as the reception apparatus 30 is equipped with as standard features, for example, a communication interface and the like besides the functional parts illustrated in FIG. 1.

The reception processing part 31 is a processing part that receives pieces of encoded data of sub-samples.

In one embodiment, each time video packets of pieces of encoded data are received through the network 2, the reception processing part 31 refers to header information in the video packets and inputs the pieces of encoded data into the corresponding decoders for the sub-samples of the pieces of encoded data, namely, the first decoding part 33-1 to the M-th decoding part 33-M. Here, the reception processing part 31 may change a threshold for determining timeout for video packets, in accordance with a command inputted from an input unit or external device not illustrated. For example, when a display priority mode is selected, the reception processing part 31 may set the timeout determining threshold shorter than when an image-quality priority mode is selected. On the other hand, when the image-quality priority mode is selected, the reception processing part 31 may set the timeout determining threshold longer than when the display priority mode is selected. In this case, the reception processing part 31 may permit retransmission control and use retransmitted packets to reconstruct the pieces of encoded data of sub-samples.

The first decoding part 33-1 to the M-th decoding part 33-M are processing parts that perform decoding for respective sub-samples.

In one embodiment, the first decoding part 33-1 to the M-th decoding part 33-M decode the pieces of encoded data of encoding-unit blocks on a block-by-block basis. When all the blocks in a single frame are decoded, that sub-sample is decoded.

The interpolation part 34 is a processing part that performs interpolation for the pixel values of missing pixels.

In one embodiment, when packet loss is detected upon timeout or the like, the interpolation part 34 identifies the positions of the missing pixels on the sub-sample from the sequence number of the packet detected to be lost and the positions of the pixels in the preceding and following received packets. Then, from among the sub-samples decoded by the first decoding part 33-1 to the M-th decoding part 33-M, the interpolation part 34 extracts the other sub-samples which include no missing pixels at the same positions as the identified missing pixels. After this, the interpolation part 34 performs interpolation for the pixel values of the missing pixels by using the pixel values of pixels on the extracted sub-samples near the missing pixels, specifically, pixels located at nearby positions on the original image such as the upper, lower, right, and left sides and the corners of the missing pixels. For example, the interpolation part 34 may set the pixel value of each missing pixel simply to the pixel value of the neighboring pixel on one of the upper, lower, left, and right sides of the missing pixel or on one of the upper left, lower left, upper right, and lower right corners of the missing pixel. Alternatively, the interpolation part 34 may set the pixel value of each missing pixel to a representative value such as an average or middle value of the two pixels on the upper and lower sides or the left and right sides of the missing pixel, the four pixels on the upper, lower, left, and right sides of the missing pixel, or the eight pixels including the upper, lower, left, and right pixels plus those on the upper left, lower left, upper right, and lower right corners of the missing pixel. Besides these, the interpolation part 34 may use a method such as bilinear interpolation or a bicubic interpolation.

The uniting part 35 is a processing part that unites sub-samples.

In one embodiment, if no packet loss has not been detected, the uniting part 35 unites the sub-samples decoded by the first decoding part 33-1 to the M-th decoding part 33-M. On the other hand, if packet loss has been detected, the uniting part 35 unites, among the sub-samples decoded by the first decoding part 33-1 to the M-th decoding part 33-M, the sub-samples from which no packet loss has been detected and the sub-sample which has undergone the interpolation by the interpolation part 34 for the pixel values of the missing pixels. Consequently, the original image is restored from the sub-samples. The original image thus obtained may be outputted to any output destination not illustrated, for example, a moving-image record part, a moving-image reproduction processing part, a processing part that identifies a monitoring target in a moving image, a processing part that detects a moving object in a moving image, or the like.

Note that the above-described processing parts such as the reception processing part 31, the first decoding part 33-1 to the M-th decoding part 33-M, the interpolation part 34, and the uniting part 35 may be implemented as below. For example, the reception processing part 31, the first decoding part 33-1 to the M-th decoding part 33-M, the interpolation part 34, and the uniting part 35 may be implemented by causing a central processing device such as a CPU to expand and execute a process that functions similarly to these processing parts on a memory. These processing parts may not necessarily be run by a central processing device but may be run by an MPU. Alternatively, the above-described processing parts may be implemented using hard-wired logics.

Also, in one example, various semiconductor memory elements such as a RAM and a flash memory are employable as a main storage device to be used by each of the above-described processing parts. Meanwhile, the storage device to be referred to by each of the above-described processing parts may not necessarily be a main storage device but may be an auxiliary storage device. In this case, an HDD, an optical disc, an SSD, or the like may be employed.

[Procedure of Processing]

Next, the procedure of processing by the transfer system 1 according to this embodiment will be described. Here, the description will be given of (1) the encoding process executed by the transmission apparatus 10 and then (2) the decoding process executed by the reception apparatus 30.

(1) Encoding Process

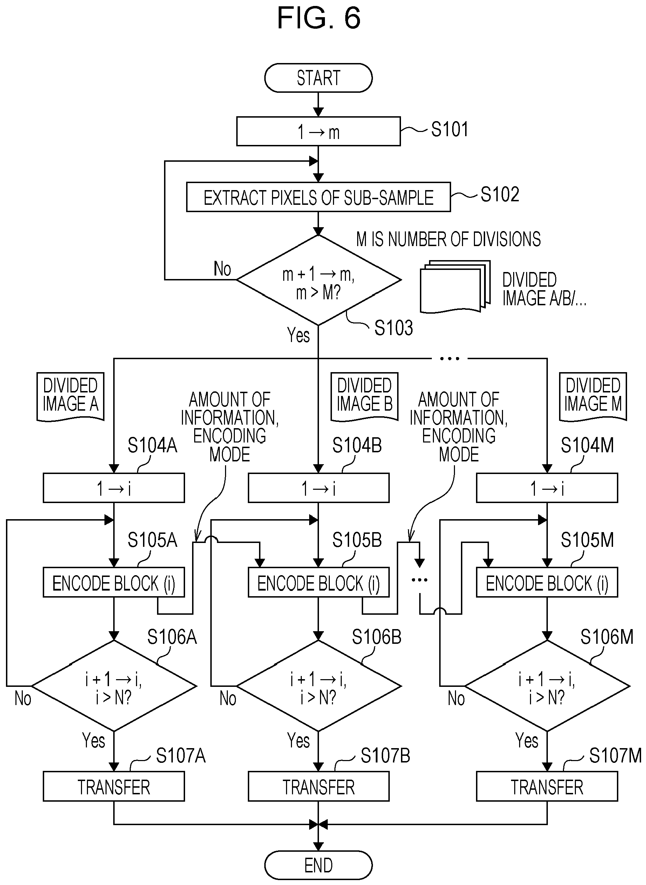

FIG. 6 is a flowchart illustrating the procedure of the encoding process according to embodiment 1. This process is executed each time the acquisition part 11 acquires an original-image frame. As illustrated in FIG. 6, the separation part 12 initializes the value of a counter m that counts the number of divisions of the original image to 1 (step S101). Then, the separation part 12 extracts a pixel in the original image acquired by the acquisition part 11 after every predetermined number of pixels in each of the horizontal and vertical directions of the original image (step S102). Consequently, one sub-sample is separated from the original image.

Then, the separation part 12 increments the value of the counter m by 1 and repeats the process of step S102 until the value of the counter m exceeds the number M of divisions (No in step S103).

Then if the value of the counter m exceeds the number M of divisions (Yes in step S103), the first encoding part 13-1 to the M-th encoding part 13-M encode in parallel the sub-samples obtained by repeating step S102.

Specifically, the first encoding part 13-1 initializes a counter i that counts the encoding-unit blocks in the sub-sample A to "1" (step S104A). Then, the first encoding part 13-1 encodes a block in the sub-sample A (step S105A). In doing so, the first encoding part 13-1 notifies the second encoding part 13-2 of the encoding mode used for the encoding in step S105A and the amount of information of the piece of encoded data obtained in step S105A. The first encoding part 13-1 then increments the value of the counter i by 1 and repeats the process of step S105A until the value of the counter i exceeds the total number N of encoding-unit blocks (No in step S106A). Then if the value of the counter i exceeds the total number N of encoding-unit blocks (Yes in step S106A), the transmission processing part 14 transmits the pieces of encoded data of the sub-sample A, obtained via the encoding by the first encoding part 13-1, to the reception apparatus 30 (step S107A).

Likewise, the second encoding part 13-2 initializes a counter i that counts the encoding-unit blocks in the sub-sample B to "1" (step S104B). Then, the second encoding part 13-2 encodes a block in the sub-sample B in accordance with the amount of information and the encoding mode notified of from the first encoding part 13-1 (step S105B). In doing so, the second encoding part 13-2 notifies the third encoding part 13-3 of the encoding mode used for the encoding in step S105B and the amount of information of the piece of encoded data obtained in step S105B. The second encoding part 13-2 then increments the value of the counter i by 1 and repeats the process of step S105B until the value of the counter i exceeds the total number N of encoding-unit blocks (No in step S106B). Then if the value of the counter i exceeds the total number N of encoding-unit blocks (Yes in step S106B), the transmission processing part 14 transmits the pieces of encoded data of the sub-sample B, obtained via the encoding by the second encoding part 13-2, to the reception apparatus 30 (step S107B).

In the case of the M-th encoding part 13-M, which is the last encoding part, the M-th encoding part 13-M initializes a counter i that counts the encoding-unit blocks in the sub-sample M to "1" (step S104M). Then, the M-th encoding part 13-M encodes a block in the sub-sample M in accordance with the amount of information and the encoding mode notified of from the (M-1)-th encoding part 13-(M-1) (step S105M). The M-th encoding part 13-M then increments the value of the counter i by 1 and repeats the process of step S105M until the value of the counter i exceeds the total number N of encoding-unit blocks (No in step S106M). Then if the value of the counter i exceeds the total number N of encoding-unit blocks (Yes in step S106M), the transmission processing part 14 transmits the pieces of encoded data of the sub-sample M, obtained via the encoding by the M-th encoding part 13-M, to the reception apparatus 30 (step S107M).

(2) Decoding Process

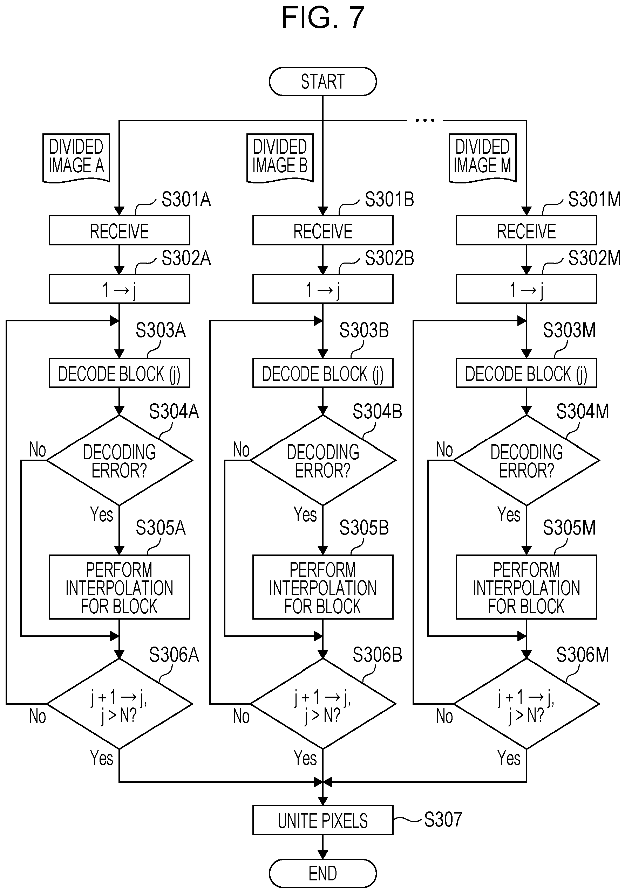

FIG. 7 is a flowchart illustrating the procedure of the decoding process according to embodiment 1. In one example, this process is executed when pieces of encoded data of sub-samples are received. As illustrated in FIG. 7, the pieces of encoded data are decoded in parallel for the respective sub-samples.

Specifically, when the reception processing part 31 receives the pieces of encoded data of the sub-sample allocated to the first decoding part 33-1 (step S301A), the first decoding part 33-1 initializes a counter j that counts the blocks in the sub-sample each defined as a unit of encoding during the encoding of the sub-sample, to "1" (step S302A).

Then, the first decoding part 33-1 decodes the piece of encoded data of a block in the sub-sample allocated to the first decoding part 33-1 (step S303A). Here, if a missing pixel is present in the block (Yes in step S304A), the interpolation part 34 performs interpolation for the pixel value of the missing pixel by referring to a neighboring pixel(s) in that block with no missing pixel in each of the sub-samples whose encoded data have been decoded by the decoding parts other than the first decoding part 33-1 (step S305A).

Then, the first decoding part 33-1 increments the value of the counter j by 1 and repeats the processes of steps S303A to S305A until the value of the counter j exceeds the total number N of encoding-unit blocks (No in step S306A).

The second decoding part 33-2 executes its processes as below in parallel with these processes of steps S301A to S306A. Specifically, when the reception processing part 31 receives the pieces of encoded data of the sub-sample allocated to the second decoding part 33-2 (step S301B), the second decoding part 33-2 initializes a counter j that counts the blocks in the sub-sample each defined as a unit of encoding during the encoding of the sub-sample, to "1" (step S302B).

Then, the second decoding part 33-2 decodes the piece of encoded data of a block in the sub-sample allocated to the second decoding part 33-2 (step S303B). Here, if a missing pixel is present in the block (Yes in step S304B), the interpolation part 34 performs interpolation for the pixel value of the missing pixel by referring to a neighboring pixel(s) in that block with no missing pixel in each of the sub-samples whose encoded data have been decoded by the decoding parts other than the second decoding part 33-2 (step S305B).

Then, the second decoding part 33-2 increments the value of the counter j by 1 and repeats the processes of steps S303B to S305B until the value of the counter j exceeds the total number N of encoding-unit blocks (No in step S306B).

Likewise, when the reception processing part 31 receives the pieces of encoded data of the sub-sample allocated to the M-th decoding part 33-M, which is the last decoding part (step S301M), the M-th decoding part 33-M initializes a counter j that counts the blocks in the sub-sample each defined as a unit of encoding during the encoding of the sub-sample, to "1" (step S302M).

Then, the M-th decoding part 33-M decodes the piece of encoded data of a block in the sub-sample allocated to the M-th decoding part 33-M (step S303M). Here, if a missing pixel is present in the block (Yes in step S304M), the interpolation part 34 performs interpolation for the pixel value of the missing pixel by referring to a neighboring pixel(s) in that block with no missing pixel in each of the sub-samples whose encoded data have been decoded by the decoding parts other than the M-th decoding part 33-M (step S305M).

Then, the M-th decoding part 33-M increments the value of the counter j by 1 and repeats the processes of steps S303M to S305M until the value of the counter j exceeds the total number N of encoding-unit blocks (No in step S306M).

Then, in the case where the value of the counter j exceeds the total number N of encoding-unit blocks in each of steps S306A, S306B, ..., and S306M, it represents that the sub-samples have been decoded. In this case, if no packet loss has been detected, the uniting part 35 unites the sub-samples decoded by the first decoding part 33-1 to the M-th decoding part 33-M. On the other hand, if packet loss has been detected, the uniting part 35 unites, among the sub-samples decoded by the first decoding part 33-1 to the M-th decoding part 33-M, each sub-sample from which no packet loss has been detected and each sub-sample which has undergone the interpolation by the interpolation part 34 for the pixel values of missing pixels. Consequently, the original image is restored (step S307). The process is then terminated.

[One Aspect of Advantageous Effect]

As described thus far, the transmission apparatus 10 according to this embodiment separates a first image to be transferred into a plurality of second images by extracting a pixel in the first image after every predetermined number of pixels in each of the horizontal and vertical directions of the first image, and encodes each of the second images. In this way, if packet loss occurs in any of these sub-samples sent to the network 2 from the transmission apparatus 10, the reception apparatus 30 restores the original image after performing interpolation for the missing part of the sub-sample experiencing the packet loss by using pixels in the region corresponding to the missing part on the sub-sample not experiencing the packet loss. Thus, even if packet loss occurs in a sub-sample, performing the above encoding reduces the possibility that pixels sitting adjacent to each other on the original image miss their pixel values. This enhances the accuracy of the interpolation using a pixel(s) near a missing pixel, for example, the pixels on the left, right, upper, and lower sides of the missing pixel. Accordingly, the transmission apparatus 10 according to this embodiment may suppress variation in image quality resulting from packet loss.

[Embodiment 2]

An embodiment has been described above regarding the disclosed apparatuses. However, various other embodiments other than the above embodiment may be carried out. In view of this, another embodiment will be described below.

[Use of Different Transmission Methods]

In embodiment 1, the case has been described in which different transmission methods are used for two sub-samples--a combination of RTP and FEC or retransmission control is used for one and RTP is used for the other. However, different protocols may be used for the two-samples, for example. In one example, the encoded data a may be transferred using the Transmission Control Protocol/Internet Protocol (TCP-IP), and the encoded data b may be transferred using the User Datagram Protocol (UDP).

[Spreading and Integration]

Also, the illustrated apparatuses' constituent elements may not necessarily be physically configured as illustrated. In other words, the specific configurations of the apparatuses regarding spreading and integration of their constituent elements are not limited to the illustrated ones. All or some of the constituent elements may be functionally or physically spread or integrated based on any unit in accordance with various types of loads, use conditions, and the like. For example, the acquisition part 11, the separation part 12, the first encoding part 13-1 to the M-th encoding part 13-M, or the transmission processing part 14 of the transmission apparatus 10 may be connected as an external device of the transmission apparatus 10 through a network. The reception processing part 31, the first decoding part 33-1 to the M-th decoding part 33-M, the interpolation part 34, or the uniting part 35 of the reception apparatus 30 may be connected as an external device of the reception apparatus 30 through a network. The acquisition part 11, the separation part 12, the first encoding part 13-1 to the M-th encoding part 13-M, and the transmission processing part 14 of the transmission apparatus 10 may be included in other devices, and these other devices may be connected to a network and operate in cooperation with each other to implement the above-described functions of the transmission apparatus 10. The reception processing part 31, the first decoding part 33-1 to the M-th decoding part 33-M, the interpolation part 34, and the uniting part 35 of the reception apparatus 30 may be included in other devices, and these other devices may be connected to a network and operate in cooperation with each other to implement the above-described functions of the reception apparatus 30.

[Encoding Program]

Also, the various processes described in the above embodiment may be implemented by executing a program prepared in advance on a computer such as a personal computer or a workstation. Now, description will be given below of an example of a computer that executes an encoding program having functions similar to those in the above embodiment.

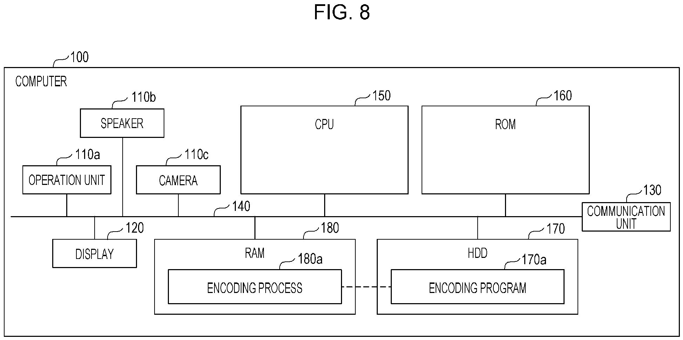

FIG. 8 is a diagram illustrating an example hardware configuration of a computer that executes an encoding program according to an embodiment. As illustrated in FIG. 8, a computer 100 includes an operation unit 110a, a speaker 110b, a camera 110c, a display 120, and a communication unit 130. This computer 100 further includes a CPU 150, a ROM 160, an HDD 170, and a RAM 180. These elements 110 to 180 are connected by a bus 140.

As illustrated in FIG. 8, the HDD 170 stores an encoding program 170a that functions similarly to the acquisition part 11, the separation part 12, the first encoding part 13-1 to the M-th encoding part 13-M, and the transmission processing part 14, which have been discussed in embodiment 1. This encoding program 170a may be integrated or spread as in the constituent elements illustrated in FIG. 1, namely, the acquisition part 11, the separation part 12, the first encoding part 13-1 to the M-th encoding part 13-M, and the transmission processing part 14. Specifically, the HDD 170 may not necessarily store all the pieces of data mentioned in embodiment 1 but may just store pieces of data to be used in the processes.

In this environment, the CPU 150 reads the encoding program 170a from the HDD 170 and expands it onto the RAM 180. Consequently, the encoding program 170a functions as an encoding process 180a, as illustrated in FIG. 8. This encoding process 180a expands various pieces of data read from the HDD 170 onto a region allocated to the encoding process 180a in the storage region of the RAM 180, and executes various processes by using the various pieces of data thus expanded. Examples of the processes executed by the encoding process 180a may include the process illustrated in FIG. 6 and the like. Note that not all the processing parts illustrated in embodiment 1 may necessarily operate on the CPU 150. Only those processing parts corresponding to target processes to be executed may be virtually implemented.

Note that the encoding program 170a may not necessarily be stored in the HDD 170 or the ROM 160 from the beginning. For example, the encoding program 170a may be stored in a "portable physical medium" insertable into the computer 100 such as a flexible disk, or a so-called FD, a CD-ROM, a DVD, a magneto-optical disc, or an IC card. The computer 100 may then acquire the encoding program 170a from this potable physical medium and execute it. Alternatively, the encoding program 170a may be stored in a different computer or a server apparatus connected to the computer 100 by a public line, the Internet, a LAN, a WAN, or the like, and the computer 100 may acquire the encoding program 170a from the different computer or the server apparatus and executes it.

Also, FIG. 8 exemplarily illustrates the case where the HDD 170 stores the encoding program 170a. It is needless to say that the HDD 170 may store a decoding program that functions similarly to the reception processing part 31, the first decoding part 33-1 to the M-th decoding part 33-M, the interpolation part 34, and the uniting part 35, and a decoding process may be expanded onto the RAM 180 to implement the process illustrated in FIG. 7 and the like.

**Claims**

1. A computer-readable storage medium storing an encoding program that causes a computer to execute a process comprising:

   acquiring a first image;
   separating the first image into a plurality of second images by extracting a pixel in the first image after every predetermined number of pixels in each of horizontal and vertical directions of the first image; and
   encoding each of the separated second images.

2. The storage medium according to claim 1, wherein the encoding includes performing the encoding by using an encoding mode common to the plurality of second images.

3. The storage medium according to claim 1, wherein the separating includes separating the first image into a predetermined number of blocks, and separating each block into the plurality of second images respectively, and
   wherein the encoding includes matching amounts of information of pieces of encoded data in the plurality of second images with respect to respective blocks of the first image.

4. The storage medium according to claim 3, wherein the encoding includes further matching each of the amounts of information of the pieces of encoded data in the plurality of second images and an amount of a piece of encoded data obtainable by encoding the corresponding block in the first image.

5. The storage medium according to any one of claims 1 to 4,
   wherein the process further comprising:

   applying different transmission method for each of the pieces of encoded data obtained by the encoding of the second images, by applying one of different communication protocols or by additionally using either of forward error correction or retransmission control.

6. An encoding method performed by a computer wherein the computer executes a process comprising:

   acquiring a first image;
   separating the first image into a plurality of second images by extracting a pixel in the first image after every predetermined number of pixels in each of horizontal and vertical directions of the first image; and
   encoding each of the separated second images.

**7.** An encoding apparatus comprising:

> an acquisition part that acquires a first image;
> a separation part that separates the first image into a plurality of second images by extracting a pixel in the first image after every predetermined number of pixels in each of horizontal and vertical directions of the first image; and
> an encoding part that encodes each of the separated second images.

**8.** A computer-readable storage medium storing a decoding program that causes a computer to execute a process comprising:

> acquiring a piece of encoded data of each of a plurality of second images obtained by separating a first image by extracting a pixel in the first image after every predetermined number of pixels in each of horizontal and vertical directions of the first image;
> decoding the piece of encoded data of each of the plurality of second images; and
> generating the first image by uniting the plurality of decoded second images.

**9.** The storage medium according to claim 8, the process further comprising performing, when a missing pixel missing a pixel value thereof is present in any of the plurality of second images, interpolation for the pixel value of the missing pixel by referring to a pixel value of a pixel in another second image at a position corresponding to the missing pixel in the any of the plurality of second images.

**10.** A decoding method performed by a computer wherein the computer executes a process comprising:

> acquiring a piece of encoded data of each of a plurality of second images obtained by separating a first image by extracting a pixel in the first image after every predetermined number of pixels in each of horizontal and vertical directions of the first image;
> decoding the piece of encoded data of each of the plurality of second images; and
> generating the first image by uniting the plurality of decoded second images.

**11.** A decoding apparatus comprising:

> a reception part that acquires a piece of encoded data of each of a plurality of second images obtained by separating a first image by extracting a pixel in the first image after every predetermined number of pixels in each of horizontal and vertical directions of the first image;

a decoding part that decodes the piece of encoded data of each of the plurality of second images; and

a uniting part that generates the first image by uniting the plurality of decoded second images.

FIG. 1

# FIG. 2

# FIG. 3

WITH FEC OR
RETRANSMISSION
CONTROL

ENCODED
BITSTREAM

WITHOUT FEC OR
RETRANSMISSION
CONTROL

DEC

DEC

A

B

INTERPOLATE

UNITE

LOST

MISSING PART

UNITED IMAGE

INTERPOLATED PART

# FIG. 4

# FIG. 5

# FIG. 6

```
                              ┌─────────┐
                              │  START  │
                              └────┬────┘
                                   │
                         ┌─────────▼─────────┐
                         │      1 → m        │───── S101
                         └─────────┬─────────┘
                                   │
              ┌───────────────────▶│
              │     ┌──────────────▼───────────────┐
              │     │ EXTRACT PIXELS OF SUB-SAMPLE  │───── S102
              │     └──────────────┬───────────────┘
              │                    │        M IS NUMBER OF DIVISIONS
              │                ╱───▼───╲
          No  │         ╱─────╱ m + 1 → m, ╲─────╲           DIVIDED
              └────────╱        m > M?        ╲             IMAGE A/B/...
                        ╲─────╲           ╱─────╱
                              ╲───┬───╱  └─ S103
                                  │ Yes
```

```
  DIVIDED          AMOUNT OF        DIVIDED        AMOUNT OF       DIVIDED
  IMAGE A        INFORMATION,       IMAGE B      INFORMATION,      IMAGE M
                   ENCODING                        ENCODING
    │               MODE             │              MODE            │
  S104A                            S104B                          S104M
    │                                │                              │
┌───▼───┐                       ┌────▼───┐                     ┌────▼───┐
│ 1 → i │                       │  1 → i │                     │  1 → i │
└───┬───┘                       └────┬───┘                     └────┬───┘
    │      S105A                     │     S105B                    │    S105M
┌───▼──────────┐             ┌───────▼──────────┐         ┌─────────▼──────────┐
│ENCODE BLOCK(i)│            │ ENCODE BLOCK (i)  │   ...   │ ENCODE BLOCK (i)   │
└───┬──────────┘             └───────┬──────────┘         └─────────┬──────────┘
    │      S106A                     │     S106B                    │    S106M
 ╱──▼───╲                        ╱───▼───╲                      ╱───▼───╲
╱ i + 1 → i,╲                   ╱ i + 1 → i,╲                  ╱ i + 1 → i,╲
╲  i > N?  ╱ No                ╲   i > N?  ╱ No               ╲   i > N?  ╱ No
 ╲──┬───╱                        ╲───┬───╱                      ╲───┬───╱
    │ Yes   S107A                    │ Yes  S107B                   │ Yes  S107M
┌───▼──────┐                    ┌────▼─────┐                   ┌────▼─────┐
│ TRANSFER │                    │ TRANSFER │                   │ TRANSFER │
└───┬──────┘                    └────┬─────┘                   └────┬─────┘
    │                                │                              │
    └────────────────────────────────┼──────────────────────────────┘
                                  ┌───▼───┐
                                  │  END  │
                                  └───────┘
```

# FIG. 7

START

DIVIDED IMAGE A     DIVIDED IMAGE B     DIVIDED IMAGE M

S301A — RECEIVE    S301B — RECEIVE    S301M — RECEIVE

S302A — $1 \to j$    S302B — $1 \to j$    S302M — $1 \to j$

S303A — DECODE BLOCK (j)    S303B — DECODE BLOCK (j)    S303M — DECODE BLOCK (j)

S304A DECODING ERROR? No / Yes    S304B DECODING ERROR? No / Yes    S304M DECODING ERROR? No / Yes

S305A — PERFORM INTERPOLATION FOR BLOCK    S305B — PERFORM INTERPOLATION FOR BLOCK    S305M — PERFORM INTERPOLATION FOR BLOCK

S306A — $j + 1 \to j, \ j > N?$ No / Yes    S306B — $j + 1 \to j, \ j > N?$ No / Yes    S306M — $j + 1 \to j, \ j > N?$ No / Yes

UNITE PIXELS — S307

END

## FIG. 8

Europäisches
Patentamt

European
Patent Office

Office européen
des brevets

**EUROPEAN SEARCH REPORT**

Application Number

EP 17 17 3029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Andrea Vitali Stmicroelectronics: "VIDEO STREAMING EBU TECHNICAL REVIEW - October 2007 1 / 12 A. Vitali", , 30 October 2007 (2007-10-30), XP055421816, Retrieved from the Internet: URL:https://tech.ebu.ch/files/live/sites/tech/files/shared/techreview/trev_312-vitali_streaming.pdf [retrieved on 2017-11-06] * the whole document * ----- | 1-11 | INV. H04N19/39 H04N19/895 H04N19/59 |
| X | VITALI ANDREAL L ET AL: "Video over IP using standard-compatible multiple description coding: An IETF proposal", JOURNAL OF ZHEJIANG UNIVERSITY SCIENCE A, ZHEIJIANG UNIVERSITY PRESS, CN, vol. 7, no. 5, 1 May 2006 (2006-05-01), pages 668-676, XP036040691, ISSN: 1673-565X, DOI: 10.1631/JZUS.2006.A0668 [retrieved on 2006-05-01] * the whole document * ----- | 1-11 | |
| X | US 2009/313662 A1 (RODRIGUEZ ARTURO A [US] ET AL) 17 December 2009 (2009-12-17) * paragraph [0036] - paragraph [0052]; figure 1 * * paragraph [0095] * * paragraph [0109] * * paragraph [0119] - paragraph [0121]; figure 2 * * paragraph [0185] * ----- | 1,5-11 | TECHNICAL FIELDS SEARCHED (IPC)<br><br>H04N |

The present search report has been drawn up for all claims

| Place of search | Date of completion of the search | Examiner |
|---|---|---|
| The Hague | 8 November 2017 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 3029

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2017

| Patent document cited in search report | Publication date | Patent family member(s) | Publication date |
|---|---|---|---|
| US 2009313662 A1 | 17-12-2009 | US 2009313662 A1<br>US 2014226730 A1 | 17-12-2009<br>14-08-2014 |

EPO FORM P0459

For more details about this annex : see Official Journal of the European Patent Office, No. 12/82

**REFERENCES CITED IN THE DESCRIPTION**

**Patent documents cited in the description**

- JP 2001339722 A

- WO 2003092295 A